# EUROPEAN PATENT APPLICATION

(11) **EP 4 759 682 A1**
(43) Date of publication of application: **17.06.2026**
(21) Application number: 25192694.5
(22) Date of filing: 30.07.2025
(51) Int. Cl.: B62D 25/12, B62D 35/00

(54) **AIR GUIDE STRUCTURE OF VEHICLE FRONT AND VEHICLE**

(30) Priority: 13.12.2024 CN 202411849155
(71) Applicant: Xiaomi EV Technology Co., Ltd., Beijing 100176 (CN)
(72) Inventor: TENG, Fei, Beijing, 100176 (CN); PAN, Junjun, Beijing, 100176 (CN); CAI, Wei, Beijing, 100176 (CN); LIAO, Pingwei, Beijing, 100176 (CN); LI, Mingyu, Beijing, 100176 (CN)
(74) Representative: Stöckeler, Ferdinand

(57) **Abstract**

The invention relates to an air guide structure of a vehicle front and a vehicle. The air guide structure of the vehicle front includes a front hatch cover (100), a vehicle lamp assembly (200) and an air guide member. The front hatch cover (100) is provided with an air outlet (101). The vehicle lamp assembly (200) is provided with an air inlet. One end of the air guide member communicates with the air inlet, and the other end of the air guide member is capable of communicating with the air outlet (101).

## Description

### TECHNICAL FIELD

The invention relates to the technical field of vehicle manufacturing, in particular to an air guide structure of a vehicle front and a vehicle.

### BACKGROUND OF THE INVENTION

In the related art, air guide structures arranged at a vehicle front of a vehicle are usually independently arranged on a left side and a right side of the vehicle front, which has a limited effect of improving aerodynamic performance of a whole vehicle and reducing wind drag.

### SUMMARY OF THE INVENTION

An objective of the invention is to provide an air guide structure of a vehicle front and a vehicle, so as to solve the problems in the related art.

In order to achieve the above objective, one aspect of the invention provides an air guide structure of a vehicle front, including:
a front hatch cover with an air outlet;
a vehicle lamp assembly with an air inlet; and
an air guide member, where one end of the air guide member communicates with the air inlet, and the other end of the air guide member is capable of communicating with the air outlet.

Optionally, the vehicle lamp assembly includes a lamp body and an air-entering guide member with the air inlet, the air-entering guide member is connected to an outer wall of the lamp body, the air inlet is formed in the air-entering guide member, and the air inlet penetrates through the air-entering guide member in a front-rear direction of a vehicle.

Optionally, the air-entering guide member is detachably connected to the lamp body.

Optionally, the outer wall of the lamp body has a first connection portion, a second connection portion is on one surface of the air-entering guide member facing the lamp body, and the first connection portion is clamped with the second connection portion.

Optionally, the air-entering guide member is connected to a top or bottom of the lamp body in a height direction of the vehicle; and

the air-entering guide member has a guide groove, a part of the air guide member extends to the air-entering guide member and is connected to a groove opening of the guide groove, two ends of the guide groove in the front-rear direction of the vehicle are open ends, and the air guide member extending to the air-entering guide member and the guide groove jointly form the air inlet.

Optionally, a first sealing member is at the groove opening of the guide groove, and the first sealing member is sandwiched between the groove opening of the guide groove and the air guide member extending to the guide groove.

Optionally, the air guide member includes a first cover plate and a second cover plate, the first cover plate covers the second cover plate in a height direction of a vehicle, the first cover plate and the second cover plate define a cavity, and two ends of the cavity in a front-rear direction of the vehicle are respectively a first open end and a second open end; and
the first open end of the cavity communicates with the air inlet, the second open end of the cavity communicates with the air outlet, and the air inlet, the cavity and the air outlet constitute an air guiding channel.

Optionally, in the front-rear direction of the vehicle, a front end of the first cover plate or the second cover plate extends to the vehicle lamp assembly and is connected to the vehicle lamp assembly.

Optionally, the air guide member further includes a second sealing member, and the second sealing member is sandwiched between the first cover plate and the second cover plate.

Optionally, the second cover plate has a water discharging port, and the water discharging port is configured to discharge water in the cavity.

Optionally, the water discharging port has a first guide grating, and the first guide grating is configured to at least guide water entering the cavity to the water discharging port.

Optionally, a second guide grating is at the second open end of the cavity, and the second guide grating is configured to at least guide air in the cavity to the air outlet.

Optionally, the air guide structure of the vehicle front further includes an air exit assembly; and
the air exit assembly includes an exterior part, a sealing mechanism and a connector, the exterior part is connected to the front hatch cover and is at the air outlet, one end of the connector communicates with the exterior part, the other end of the connector communicates with the air guide member, and the sealing mechanism is sandwiched between the connector and the exterior part.

Optionally, the air exit assembly further includes a second sealing washer, and the second sealing washer is sandwiched between the exterior part and the front hatch cover.

Optionally, the air exit assembly further includes a middle member, and the middle member is connected to the sealing mechanism and between the connector and the exterior part.

Optionally, the sealing mechanism includes a third sealing member and a fourth sealing member, the third sealing member and the fourth sealing member are opposite to each other, the middle member is sandwiched between the third sealing member and the fourth sealing member, the third sealing member is connected to the exterior part, and the fourth sealing member is connected to the connector.

Optionally, the air exit assembly further includes a framework, and the framework is between the exterior part and the sealing mechanism and connected to the exterior part; and
a first sealing washer is between the framework and the exterior part.

Optionally, the air guide structure of the vehicle front further includes a sealing rubber sleeve, a first end of the sealing rubber sleeve is separably connected to the air guide member, and a second end of the sealing rubber sleeve is connected to an end of the connector away from the exterior part;

Optionally, the front hatch cover includes a front hatch upper cover and a front hatch lower cover, the front hatch upper cover is mutually connected to the front hatch lower cover, the sealing rubber sleeve is connected to the front hatch lower cover, the air outlet is in the front hatch upper cover, and the exterior part is connected to the front hatch upper cover.

Optionally, the first end of the sealing rubber sleeve has a first bending portion, the first bending portion is separably connected to the air guide member, the second end of the sealing rubber sleeve has a second bending portion, and the second bending portion is connected to the end of the connector away from the exterior part.

Optionally, the second end of the sealing rubber sleeve is provided with a third guide grating.

Optionally, a flow area of the air exit assembly gradually increases from an end of the air exit assembly close to the air guide member to an end of the air exit assembly close to the front hatch cover.

Optionally, a flow area of the end of the air exit assembly close to the front hatch cover is one time to two times a flow area of the end of the air exit assembly close to the air guide member.

Optionally, in an air flowing direction, a length of a flow channel for air flowing in the air guide member is greater than a length of a flow channel for air flowing in the air exit assembly.

Optionally, in the air flowing direction, the length of the flow channel for air flowing in the air guide member is one time to 1.5 times the length of the flow channel for air flowing in the air exit assembly.

Optionally, the air guide member extends in the front-rear direction of a vehicle, and an axis of the air outlet extends in the front-rear direction of the vehicle and tilts upwards; and
both the air guide member and the air outlet are close to vehicle sides in a left-right direction of the vehicle;

Optionally, an included angle between the axis of the air outlet and a horizontal plane is less than or equal to 30°.

Optionally, the air outlet is movable relative to the air guide member;
the air guide structure of the vehicle front has a first state and a second state; in the first state, the front hatch cover is opened, and the air outlet does not communicate with the air guide member; and in the second state, the front hatch cover is closed, and the air outlet communicates with the air guide member.

A second aspect of the invention further provides a vehicle, including the above air guide structure of the vehicle front.

In the above technical solution, the air inlet is integrated onto the vehicle lamp assembly, a vehicle lamp is a large windward region at the vehicle front of the whole vehicle, and the air inlet is integrated onto the vehicle lamp assembly, so that a windward area of the air inlet can be increased. In this way, guide of air of the vehicle front is improved, an effect of spoiling is realized, and the whole wind drag coefficient may be reduced. Through the arranged air guide member, air guiding is realized. The air guide member can guide air entering from the air inlet of the vehicle lamp assembly to the air outlet, so air guiding is realized. By arranging the air outlet in the front hatch cover, air entering from the air inlet of the vehicle lamp assembly is made to flow out from the air outlet of the front hatch cover, so the effect of spoiling on the air on the front hatch cover can be achieved. Thus, wind drag to the front hatch cover may be reduced, the wind drag coefficient of the whole vehicle may be reduced, driving energy consumption of the whole vehicle is thus reduced, and cruising ability of the whole vehicle is improved.

Other features and advantages of the invention are described in detail in the following detailed description.

### BRIEF DESCRIPTION OF DRAWINGS

Accompanying drawings are for providing further understanding of the invention, constitute a part of the specification and together with the detailed description, serve to explain the invention without constituting the limitation on the invention. In the accompanying drawings:
FIG. 1 is a schematic structural diagram of an air guide structure of a vehicle front in an implementation of the invention.
FIG. 2 is a section view of an air guide structure of a vehicle front in an implementation of the invention.
FIG. 3 is a schematic structural diagram of a connection relationship between an air guide member, a vehicle lamp assembly and an air exit assembly in an implementation of the invention.
FIG. 4 is a section view along B-B of FIG. 3 in an implementation of the invention.
FIG. 5 is a schematic enlarged view of a position A of FIG. 4 in an implementation of the invention.
FIG. 6 is a schematic enlarged view of a position E of FIG. 4 in an implementation of the invention.
FIG. 7 is a schematic structural diagram of a second cover plate in an implementation of the invention.
FIG. 8 is a schematic structural diagram of a vehicle lamp assembly in an implementation of the invention.
FIG. 9 is a schematic structural diagram of a lamp body at a viewing angle in an implementation of the invention.
FIG. 10 is a schematic structural diagram of a lamp body at another viewing angle in an implementation of the invention.
FIG. 11 is a schematic structural diagram of an air-entering guide member in an implementation of the invention.
FIG. 12 is a schematic structural diagram of an air exit assembly in an implementation of the invention.
FIG. 13 is a section view along D-D of FIG. 11 in an implementation of the invention.
FIG. 14 is an exploded view of an air exit assembly in an implementation of the invention.
FIG. 15 is a schematic structural diagram of a sealing rubber sleeve in an implementation of the invention.
FIG. 16 is a section view along C-C of FIG. 14 in an implementation of the invention.

### DETAILED DESCRIPTION OF THE INVENTION

Specific implementations of the invention are described in detail below with reference to accompanying drawings. It is to be understood that specific implementations described here are merely for describing and explaining the invention instead of limiting the invention.

In the invention, without contrary descriptions, position words such as "upper, lower, left and right" are usually defined according to directions of the figures, and "inner and outer" refer to interior and exterior of related parts. Besides, terms such as "first" and "second" are used for distinguishing description instead of being understood as indicating or implying a relative significance.

In the description of the invention, it needs to be further noted that unless otherwise specified and limited clearly, terms "arrange" and "connect" are to be understood in a broad sense. For example, it may be a fixed connection, a detachable connection or an integrated connection; and it may be a direct connection, an indirect connection through an intermediate medium, or communication between interiors of two elements. Specific meanings of the above terms in the invention may be understood by those ordinarily skilled in the art according to specific conditions.

With development of new energy vehicles, in order to reduce energy consumption during driving and improve cruising ability, there are higher and higher demands for aerodynamic performance of the vehicles and reduction of wind drag, and an air guide structure of a vehicle front plays an important role in reducing wind drag of the vehicle.

In the related art, air guide structures arranged at a vehicle front of a vehicle are usually independently arranged on a left side and a right side of the vehicle front, which has a limited effect of improving aerodynamic performance of a whole vehicle and reducing wind drag.

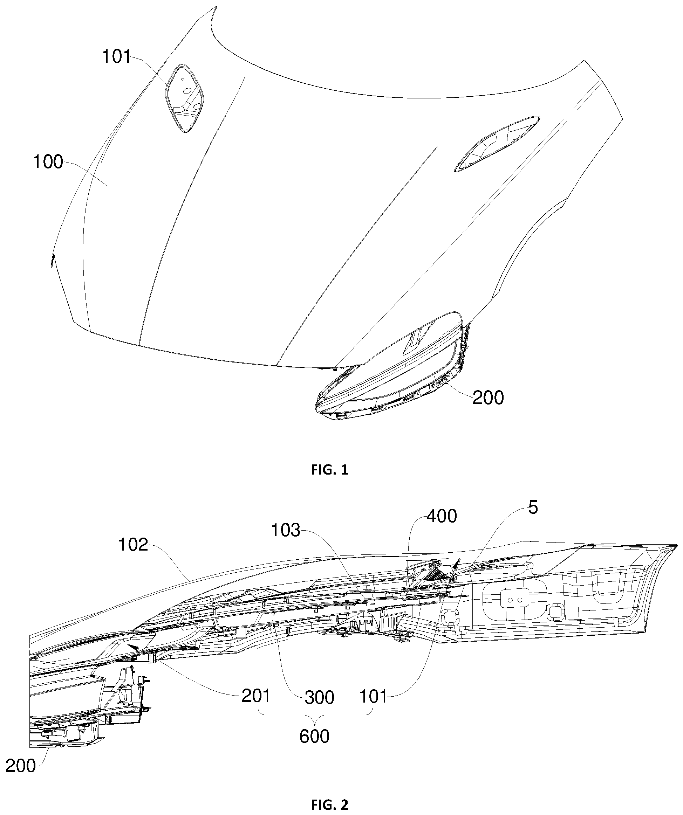

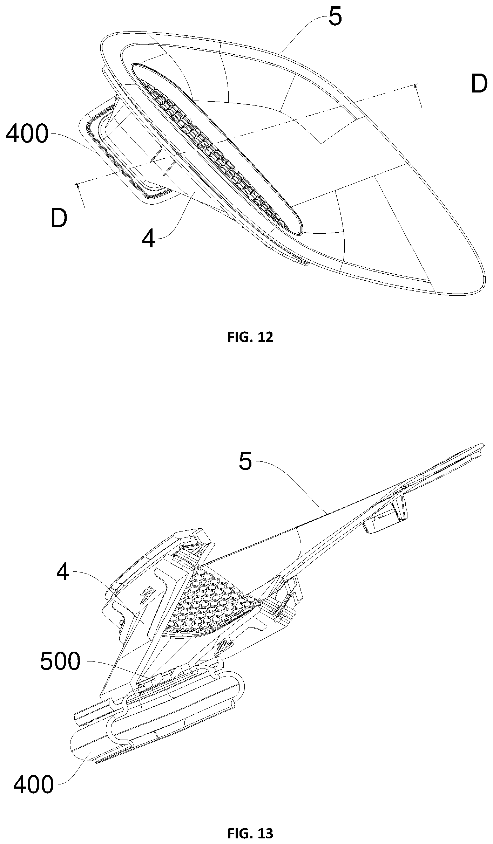

Thus, as shown in FIG. 1 to FIG. 15, one aspect of the invention provides an air guide structure of a vehicle front, including a front hatch cover 100, a vehicle lamp assembly 200 and an air guide member 300.

The front hatch cover 100 is provided with an air outlet 101. The vehicle lamp assembly 200 is provided with an air inlet 201. One end of the air guide member 300 communicates with the air inlet 201. The other end of the air guide member 300 is capable of communicating with the air outlet 101.

The air guide member 300 guides air to the air outlet 101 from the air inlet 201, air flowing is implemented. The air inlet 201 in the vehicle lamp assembly 200, the air guide member 300 and the air outlet 101 in the front hatch cover 100 jointly form an air guiding channel 600.

In the above technical solution, the air inlet 201 is integrated onto the vehicle lamp assembly 200, a vehicle lamp is a large windward region at the vehicle front of the whole vehicle, and the air inlet 201 is integrated onto the vehicle lamp assembly 200, so that a windward area of the air inlet 201 can be increased. In this way, guide of air of the vehicle front is improved, an effect of spoiling is realized, and the wind drag coefficient of the whole vehicle may be reduced. Through the arranged air guide member 300, air guiding is realized. The air guide member 300 can guide air entering from the air inlet 201 of the vehicle lamp assembly 200 to the air outlet 101, so air guiding is realized. By arranging the air outlet 101 in the front hatch cover 100, air entering from the air inlet 201 of the vehicle lamp assembly 200 is made to flow out from the air outlet 101 of the front hatch cover 100, so the effect of spoiling on the air on the front hatch cover 100 can be achieved. Thus, wind drag to the front hatch cover 100 may be reduced, the wind drag coefficient of the whole vehicle may be reduced, driving energy consumption of the whole vehicle is thus reduced, and cruising ability of the whole vehicle is improved.

As shown in Fig.2, in the height direction of the vehicle, the air guide member 300 is located below the front hatch cover 100, namely, the air guide member 300 is located in a front cabin, and a path of air flowing is to flow in from the vehicle lamp assembly 200 of the vehicle front, flow in the air guide member 300 in the front hatch cover 100, then flow to the air outlet 101 in the front hatch cover 100 and be blown out from the air outlet 101. The air guide member 300 is located below the front hatch cover 100, which is a concealed design and does not affect attractiveness of the vehicle.

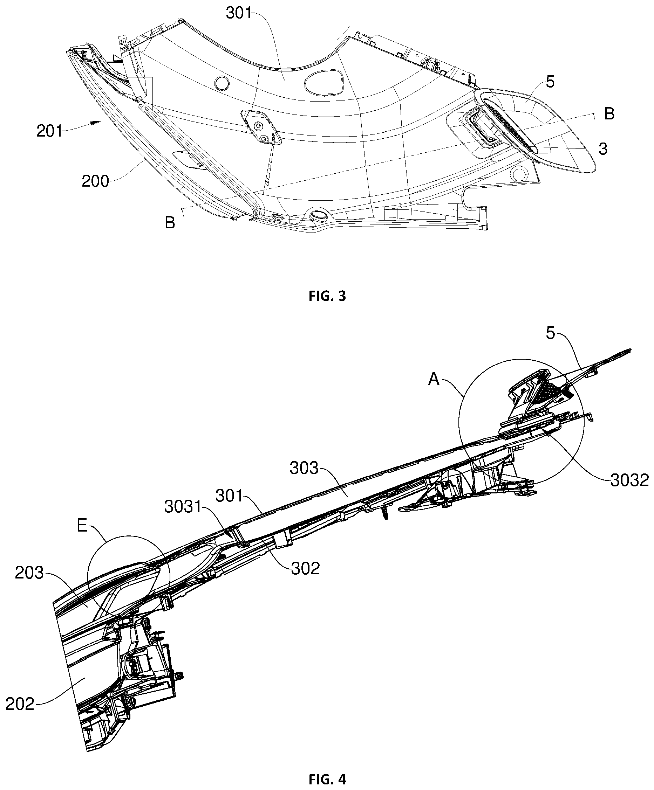

Optionally, as shown in Fig.4, in an implementation of the invention, the vehicle lamp assembly 200 includes a lamp body 202 and an air-entering guide member 203, the air-entering guide member 203 is connected to an outer wall of the lamp body 202, the air inlet 201 is formed in the air-entering guide member 203, and the air inlet 201 penetrates through the air-entering guide member 203 in a front-rear direction of a vehicle.

The air-entering guide member 203 may realize air-entering guide, and the air inlet 201 is formed in the air-entering guide member 203, which may not affect functions of the lamp body 202. The air-entering guide member 203 is connected to the outer wall of the lamp body 202, which does not destroy a structure of the lamp body 202. The structure of the lamp body 202 does not need to be redesigned, and a development period and development cost can be reduced.

It may be understood that the lamp body 202 serves to illuminate, the air-entering guide member 203 serves to guide entering air, and the lamp body and the air-entering guide member are integrated but do not interfere with each other. Meanwhile, the air-entering guide member 203 may be designed as different shapes, so after the air-entering guide member is connected to the outer wall of the lamp body 202, the air-entering guide member and the lamp body may achieve a complementary effect, and shape design and attractiveness of the vehicle lamp assembly 200 are improved.

Optionally, in an implementation of the invention, the air-entering guide member 203 is connected to a top or bottom of the lamp body 202 in a height direction of the vehicle. In this way, a windward area of the air-entering guide member 203 can be better increased, air is guided as much as possible, and the wind drag is reduced. In some examples, the air-entering guide member 203 is connected to the top of the lamp body 202, which is close to the front hatch cover 100, so it is conducive to guiding air to the air outlet 101 of the front hatch cover 100.

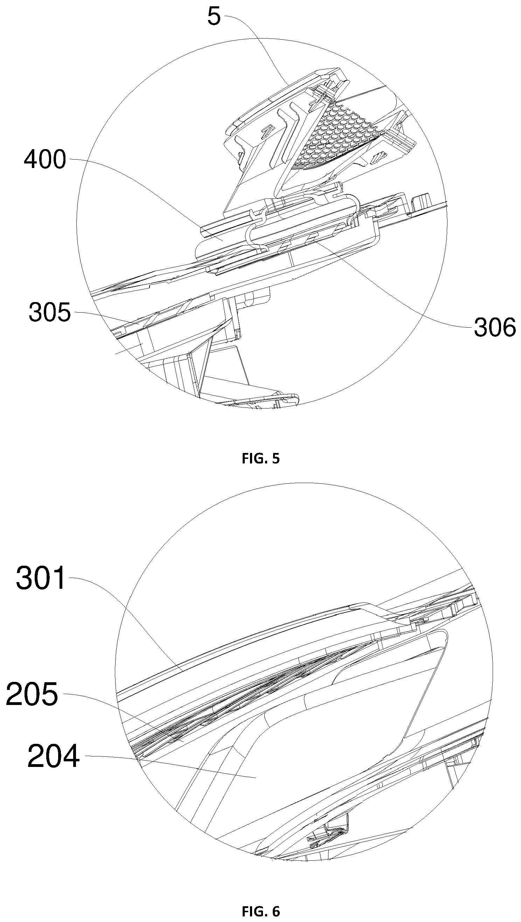

Optionally, as shown in Fig.6, the air-entering guide member 203 is provided with a guide groove 204, a part of the air guide member 300 extends to the air-entering guide member 203 to be connected to a groove opening of the guide groove 204, two ends of the guide groove 204 in the front-rear direction of the vehicle are arranged as open ends, and the air guide member 300 extending to the air-entering guide member 203 and the guide groove 204 jointly form the air inlet 201. The arranged guide groove 204 and part of the air guide member 300 form the air inlet 201, so air entering can be better implemented, and a structure of the air-entering guide member 203 can be simplified. The groove opening of the guide groove 204 is sealed by part of the air guide member 300, and connection of the air guide member 300 and the air-entering guide member 203 is implemented.

In some examples, the air-entering guide member 203 is connected to the top of the lamp body 202, the guide groove 204 is formed in the top of the air-entering guide member 203, and thus the groove opening of the guide groove 204 faces upwards. A part of a structure of the air guide member 300 is located on an upper portion of the air-entering guide member 203 and is connected to the air-entering guide member 203, and thus the groove opening of the guide groove 204 is sealed. The two ends of the guide groove 204 in the front-rear direction of the vehicle are arranged as open ends which may be respectively for air entering and air exit, so that air is made to flow in the guide groove 204. The other part of the air guide member 300 may be connected to a rear end of the air-entering guide member 203, namely connected and communicating with the open end of the rear end of the guide groove 204, and thus air can flow into the air guide member 300. In some other examples, the air-entering guide member 203 may be connected to the bottom of the lamp body 202, and the guide groove 204 is formed in the bottom of the air-entering guide member 203.

Optionally, in another implementation of the invention, the air-entering guide member 203 is connected to an outer side wall of the lamp body 202 in a left-right direction of the vehicle.

Optionally, as shown in Fig.6, in an implementation of the invention, the groove opening of the guide groove 204 is provided with a first sealing member 205, and the first sealing member 205 is sandwiched between the groove opening of the guide groove 204 and the air guide member 300 extending to the guide groove 204. A gap between the groove opening of the guide groove 204 and the air guide member 300 can be sealed by the arranged first sealing member 205, so occurrence of problems such as air leakage or water leakage is avoided. In some examples, the first sealing member 205 may be made of foam or rubber and arranged to be of a long strip structure, and the first sealing member 205 extends in a circumferential direction of the groove opening of the guide groove 204, so a sealing effect is ensured.

Optionally, in an implementation of the invention, the air-entering guide member 203 is detachably connected to the lamp body 202. In this way, disassembling of the air-entering guide member 203 from the lamp body 202 may be implemented, so a subsequent replacement operation is facilitated. It may be understood that during assembling, the air-entering guide member 203 and the lamp body 202 may be integrated; and if the air-entering guide member 203 or the lamp body 202 is broken in later use by a user, disassembling and replacement may be performed independently, and thus maintaining cost is reduced.

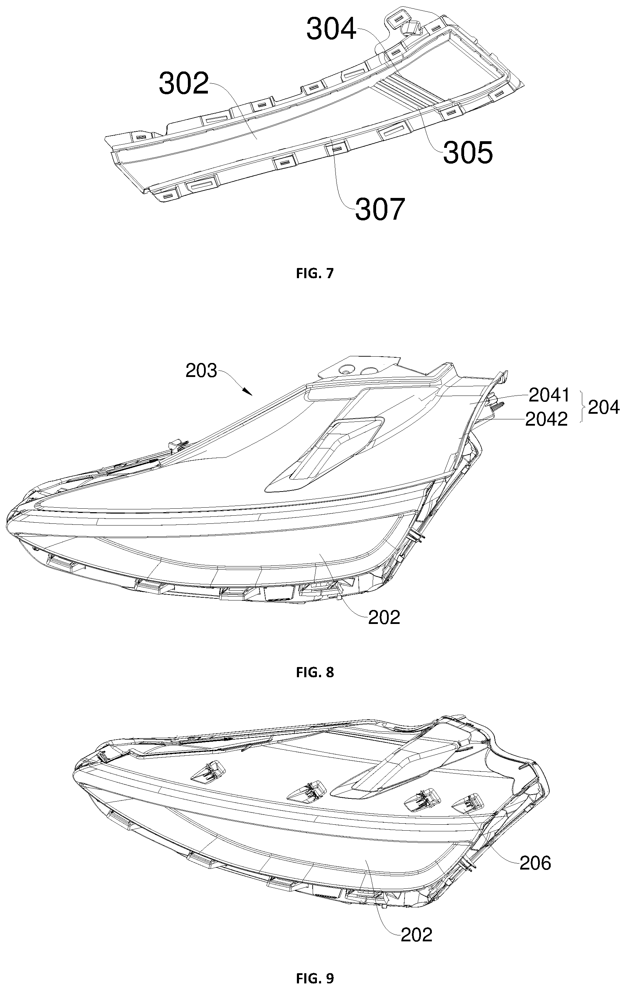

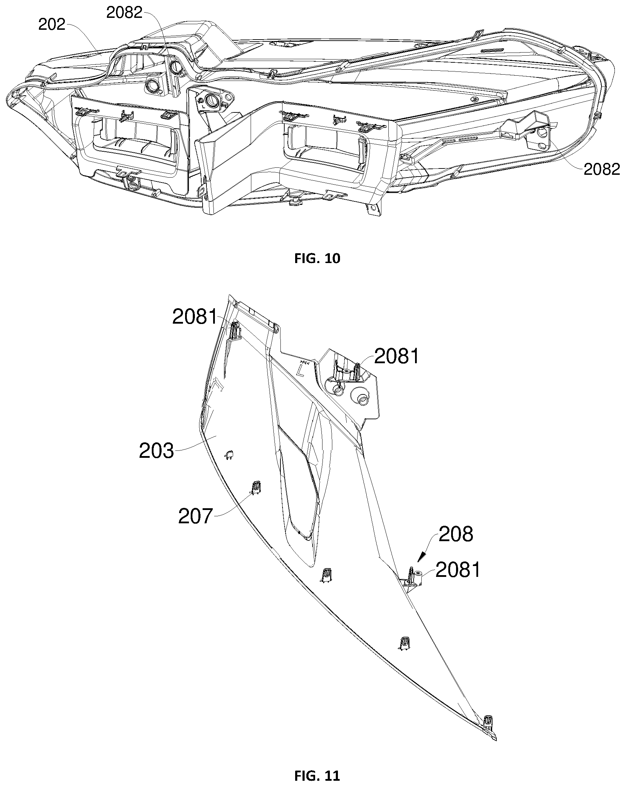

Optionally, as shown in Fig.9 and Fig.11, in an implementation of the invention, the outer wall of the lamp body 202 is provided with a first connection portion 206, a second connection portion 207 is formed on one surface of the air-entering guide member 203 facing the lamp body 202, and the first connection portion 206 is connected to the second connection portion 207 in a clamped mode. In this way, connection and disassembling of the air-entering guide member 203 and the lamp body 202 can be facilitated, and operations are simple and fast.

Optionally, in an implementation of the invention, one of the first connection portion 206 or the second connection portion 207 is arranged as a buckle, the other one is arranged as a slot, and the buckle can be clamped to the slot.

The buckle can be clamped into the slot, so that connection of the buckle and the slot is realized. In some examples, the slot may be arranged as a groove, and after the buckle is clamped into the slot, the buckle and the slot are directly snap fit. In some other examples, a hook may be arranged in the slot, the buckle is clamped into the slot to be connected to the hook, so the buckle is limited in the slot, and the buckle and the slot are in snap fit in a connection mode.

In some examples, the first connection portion 206 is arranged as a slot and the second connection portion 207 is arranged as a buckle. The slot may be formed by making the outer wall of the lamp body 202 inwards concave directly, and the buckle may be formed by making the air-entering guide member 203 protrude towards one surface of the lamp body 202.

Optionally, in another implementation of the invention, one of the first connection portion 206 or the second connection portion 207 is arranged as an inserting head, the other is arranged as a locking head, and a limiting elastic piece is arranged in the locking head. The inserting head can be inserted into the locking head and cooperate with the limiting elastic piece, and the inserting head and the locking head are in snap fit.

Optionally, in another implementation of the invention, the air-entering guide member 203 and the lamp body 202 may be integrated and cannot be separated.

Optionally, as shown in Fig.11, in an implementation of the invention, the vehicle lamp assembly 200 further includes a locking mechanism 208.

In the front-rear direction of the vehicle, the locking mechanism 208 is close to rear ends of the lamp body 202 and the air-entering guide member 203, the locking mechanism 208 connects the rear end of the lamp body 202 and the rear end of the air-entering guide member 203. The first connection portion 206 is close to a front end of the lamp body 202, and the second connection portion 207 is close to a front end of the air-entering guide member 203. Through the arranged locking mechanism 208, connection strength and connection stability of the lamp body 202 and the air-entering guide member 203 can be improved. The locking mechanism 208 serves as a connection and securing relationship, connection of the first connection portion 206 and the second connection portion 207 implement a connection and securing relationship, and thus two connection relationships may be achieved.

The first connection portion 206 and the second connection portion 207 are mainly for connection and securing of the front ends of the lamp body 202 and the air-entering guide member 203, and the locking mechanism 208 is mainly for connection and securing of the rear ends of the lamp body 202 and the air-entering guide member 203.

The locking mechanism 208 includes a protruding portion 2081 formed on the air-entering guide member 203 and a matching portion 2082 formed on the lamp body 202, and the protruding portion 2081 is connected to the matching portion 2082. Through connection of the protruding portion 2081 and the matching portion 2082, secondary connection of the air-entering guide member 203 and the lamp body 202 can be realized, and the connection strength is improved.

The protruding portion 2081 and the matching portion 2082 are opposite to each other and attached together, so the connection is realized. In some examples, the protruding portion 2081 and the matching portion 2082 may be connected through a screw or secured through a fixture. It may be understood that the protruding portion 2081 may be integrated with the air-entering guide member 203, and in the front-rear direction of the vehicle, the protruding portion 2081 is close to the rear end of the air-entering guide member 203. In some examples, the protruding portion 2081 is formed by the rear end of the air-entering guide member 203 protruding backwards. The matching portion 2082 may be integrated with the lamp body 202, and in the front-rear direction of the vehicle, the matching portion 2082 is close to the rear end of the lamp body 202. In some examples, the matching portion 2082 is formed by the rear end of the lamp body 202 protruding backwards. The rear end of the lamp body 202 and the rear end of the air-entering guide member 203 do not need too many structures, so arrangement of the protruding portion 2081 and the matching portion 2082 are facilitated. The connection stability and reliability are improved through screw connection and the like.

Optionally, in an implementation of the invention, the protruding portion 2081 is provided with a first hole, the matching portion 2082 is provided with a second hole, the first hole and the second hole mutually communicate and are for penetration by a screw, and the protruding portion 2081 is connected to the matching portion 2082 through the screw. In this way, connection and disassembling of the protruding portion 2081 and the matching portion 2082 may be realized, so the air-entering guide member 203 and the lamp body 202 may be disassembled and integrated. In addition, the connection strength of the protruding portion 2081 and the matching portion 2082 can be improved in a manner of screw connection.

The first hole and the second hole are for penetration of the screw, and an axis of the first hole and an axis of the second hole are coaxial. In some examples, the first hole may be a through hole, the second hole may be a threaded hole, the screw penetrates through the first hole and then is in screw-thread fit with the second hole, and thus connection and securing of the protruding portion 2081 and the matching portion 2082 are realized. In some examples, the axis of the first hole and the axis of the second hole extend in the front-rear direction of the vehicle.

Optionally, as shown in Fig.8, in an implementation of the invention, the air-entering guide member 203 includes a transverse plate 2041 and at least two vertical plates 2042 relatively arranged at intervals. One ends of the vertical plates 2042 are connected to the transverse plate 2041, the transverse plate 2041 is connected to the lamp body 202, and the at least two vertical plates 2042 and the transverse plate 2041 define the guide groove 204.

The transverse plate 2041 is configured to be connected with the lamp body 202, so a connection area is ensured and the connection strength and stability are improved. The vertical plates 2042 may subsequently extend along a front of the vehicle, so air guiding may be realized. In some examples, the number of the vertical plates 2042 is two, the two vertical plates 2042 are relatively arranged at intervals, the two vertical plates 2042 and the transverse plate 2041 define the guide groove 204, and a space between the two vertical plates 2042 is for air passing.

Optionally, as shown in Fig.4, in an implementation of the invention, the air guide member 300 includes a first cover plate 301 and a second cover plate 302. In the height direction of the vehicle, the first cover plate 301 covers the second cover plate 302, and the first cover plate 301 and the second cover plate 302 define a cavity 303. In the front-rear direction of the vehicle, two ends of the cavity 303 are arranged as a first open end 3031 and a second open end 3032.

As shown in Fig.2, The first open end 3031 of the cavity 303 communicates with the air inlet 201, the second open end 3032 of the cavity 303 communicates with the air outlet 101, and the air inlet 201, the cavity 303 and the air outlet 101 constitute an air guiding channel 600.

The first cover plate 301 and the second cover plate 302 cover each other, so the cavity 303 is formed between the first cover plate 301 and the second cover plate 302. The cavity 303 can be used for air passing, so air guiding is realized. In some examples, one surface of the second cover plate 302 opposite to the first cover plate 301 is inwards concave in a direction away from the first cover plate 301 to form a concave groove, a groove opening of the concave groove is sealed through the first cover plate 301, and thus the cavity 303 is formed. In some examples, a part of the second cover plate 302 is attached to the first cover plate 301 and may be connected to the first cover plate 301 through a screw. In the height direction of the vehicle, the first cover plate 301 is located above the second cover plate 302, and the first cover plate 301 is connected to the front hatch cover 100. In the left-right direction of the vehicle, a size of the first cover plate 301 is greater than a size of the second cover plate 302, which is conducive to connecting the first cover plate 301 and the front hatch cover 100.

Optionally, in an implementation of the invention, the first cover plate 301 and the second cover plate 302 extend in the front-rear direction of the vehicle. In this way, air is better guided to the front hatch cover 100 from the vehicle lamp assembly 200.

Optionally, in the front-rear direction of the vehicle, a front end of the first cover plate 301 or the second cover plate 302 extends to the vehicle lamp assembly 200 and is connected to the vehicle lamp assembly 200. In this way, the cavity 303 communicates with the air inlet 201, so air is made to flow to the cavity 303 from the air inlet 201. In some examples, the front end of the first cover plate 301 extends to the air-entering guide member 203, the groove opening of the guide groove 204 is sealed through the first cover plate 301, the first cover plate 301 and the guide groove 204 jointly define the air inlet 201, and thus the air inlet 201 communicates with the cavity 303.

Optionally, in an implementation of the invention, the second cover plate 302 is provided with a water discharging port 304. The water discharging port 304 is arranged as being capable of discharging water in the cavity 303.

As shown in Fig.7, The water discharging port 304 can implement water discharging, namely, can discharge water entering the cavity 303, thus preventing water from flowing into the air inlet 201 via the cavity 303 and making contact with the lamp body 202, and avoiding occurrence of a phenomenon of water flowing onto the lamp body 202. For example, in a rainy scene or a vehicle washing scene, when water flows into the cavity 303 from the air outlet 101, the water in the cavity 303 may be discharged via the water discharging port 304 without continuing to flow into the air inlet 201.

Optionally, in an implementation of the invention, the water discharging port 304 is provided with a first guide grating 305, and the first guide grating 305 is configured to guide water entering the cavity 303 to the water discharging port 304 and to guide air in the cavity 303 to the air outlet 101.

The first guide grating 305 has two functions. For the first function, air in the cavity 303 is guided to the air outlet 101, namely, air entering the cavity 303 from the air inlet 201 can be blocked from flowing out from the water discharging port 304. For the second function, the water in the cavity 303 is guided to the water discharging port 304, namely, the water in the cavity 303 is blocked from flowing to the air inlet 201, so that the first guide grating 305 cannot affect flowing of the air in the cavity 303; and discharging of the water in the cavity 303 can be realized, and thus water is further prevented from flowing to the air inlet 201.

In some examples, the first guide grating 305 includes a plurality of first plates in parallel at intervals. A first pore exists between every two adjacent first plates. The plurality of first plates are inclined, and an orientation of the first pores remains consistent with a flowing direction of air in the cavity 303, so that when the air in the cavity 303 flows to the air outlet 101 from the cavity 303, the air can flow in a way that it is attached to surfaces of the first plates, and the first plates do not have a blocking effect. Meanwhile, the first plates can also have a blocking effect on water, so the water is blocked by the first plates and then flows to the water discharging port 304.

Optionally, as shown in Fig.5, in an implementation of the invention, the second open end 3032 of the cavity 303 is provided with a second guide grating 306. The second guide grating 306 is configured to guide air in the cavity 303 to the air outlet 101 and to guide water into the cavity 303. Air guiding is better realized through the second guide grating 306, so that the air flows to the air outlet 101. Water can be guided to the cavity 303, so the water is better discharged from the water discharging port 304. In some examples, the second guide grating 306 includes a plurality of second plates in parallel at intervals. A second pore exists between every two adjacent second plates. The plurality of second plates are inclined, and an orientation of the second pores remains consistent with a flowing direction of air that is in the cavity 303 and flows towards the air outlet 101, so that when the air in the cavity 303 flows to the air outlet 101 from the cavity 303, the air can flow attached to surfaces of the second plates and the second plates do not have a blocking effect.

Optionally, in an implementation of the invention, the air guide member 300 further includes a second sealing member 307. The second sealing member 307 is sandwiched between the first cover plate 301 and the second cover plate 302. A gap between the first cover plate 301 and the second cover plate 302 can be sealed through the arranged second sealing member 307, so occurrence of problems such as air leakage or water leakage is avoided. In some examples, the second sealing member 307 may be made of foam or rubber and arranged to be of a long strip structure, and the second sealing member 307 extends in a circumferential direction of the first cover plate 301 and the second cover plate 302, so a sealing effect is ensured.

Optionally, in another implementation of the invention, the air guide member 300 includes a barrel. The barrel extends in the front-rear direction of the vehicle. One end of the barrel is connected to the vehicle lamp assembly 200 and communicates with the air inlet 201, and the other end of the barrel communicates with the air outlet 101. A shape of a cross section of the barrel may be rectangular or circular.

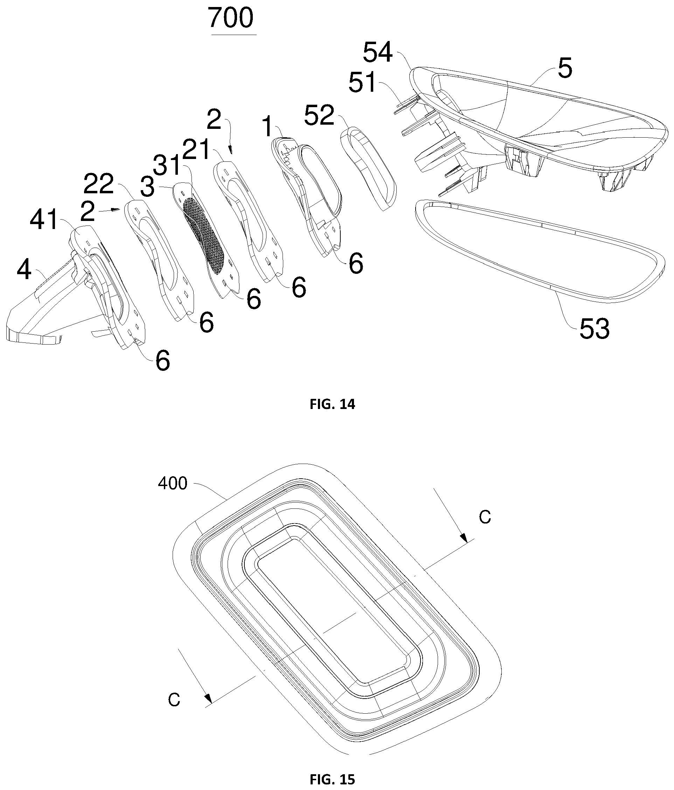

Optionally, as shown in Fig.14, in an implementation of the invention, the air guide structure of the vehicle front further includes an air exit assembly 700.

The air exit assembly 700 includes an exterior part 5, a sealing mechanism 2 and a connector 4. The exterior part 5 is connected to the front hatch cover 100 and arranged at the air outlet 101. One end of the connector 4 communicates with the exterior part 5, the other end of the connector 4 communicates with the air guide member 300. The sealing mechanism 2 is sandwiched between the connector 4 and the exterior part 5.

The exterior part 5 may be connected to the front hatch cover 100 of the vehicle. The exterior part 5 serves as a decorating part, which may improve the attractiveness. Meanwhile, the exterior part 5 may also realize air exit. The sealing mechanism 2 and the connector 4 are connected to the exterior part 5, so the exterior part 5 serves as a main supporting member. The exterior part 5 is connected to the front hatch cover 100, so securing of the sealing mechanism 2 and the connector 4 may be realized. Both the sealing mechanism 2 and the connector 4 use the exterior part 5 as a connection securing point, so a compacting effect of the connector 4, the sealing mechanism 2 and the exterior part 5 may be improved, and sealing performance is improved.

The connector 4 communicates with the air guide member 300, so air of the air guide member 300 flows to the connector 4 and then flows out via the exterior part 5. The connector 4 and the exterior part 5 can compact the sealing mechanism 2, so the sealing performance is improved.

Optionally, in an implementation of the invention, the air exit assembly 700 further includes a framework 1. The framework 1 is located between the exterior part 5 and the sealing mechanism 2 and connected to the exterior part 5. A structural strength of the air exit assembly 700 can be improved through the arranged framework 1, so reliability and stability are ensured.

The sealing mechanism 2 can seal a gap between the middle member 3 and the framework 1. The framework 1 is connected to the exterior part 5. Both the sealing mechanism 2 and the framework 1 use the exterior part 5 as a connection securing point, so a compacting effect between the sealing mechanism 2 and the framework 1 may be improved. The connector 4 is arranged relative to the framework 1, and the sealing mechanism 2 is located between the connector 4 and the framework 1, so the sealing effect can be improved.

Optionally, a first sealing washer 52 is arranged between the framework 1 and the exterior part 5. A gap between the exterior part 5 and the framework 1 can be sealed through the arranged first sealing washer 52, so that the sealing performance between the framework 1 and the exterior part 5 is improved. In some examples, the first sealing washer 52 may be made of foam or rubber.

Optionally, in an implementation of the invention, the air exit assembly 700 further includes a middle member 3. The middle member 3 is connected to the sealing mechanism 2 and located between the connector 4 and the exterior part 5. Through the arranged middle member 3, different demands can be met, and it is applied to more scenes.

The middle member 3 may be a structural member with different functions. A specific arrangement of the middle member 3 may change as needed, which is not limited too much here. In some examples, the middle member 3 may be a filter mesh. A middle of the middle member 3 is provided with a plurality of meshes 31. The middle member 3 is arranged as the filter mesh, so filtering of sundries can be implemented. Meanwhile, the filter mesh may have an effect of reducing a water flow speed, so that a phenomenon of water leakage when a water pressure is too high due to excessively high flow speed of the water may be avoided.

Optionally, in another implementation of the invention, the middle member 3 may be constructed as a fourth grating. The fourth grating may also have an effect of reducing the water flow speed and may also play a role in part in blocking sundries.

The middle member 3, the sealing mechanism 2, the framework 1 and the connector 4 may be disassembled, so that the filter mesh or the fourth grating may be cleaned.

Optionally, in an implementation of the invention, the sealing mechanism 2 includes a third sealing member 21 and a fourth sealing member 22. The third sealing member 21 and the fourth sealing member 22 are opposite. The middle member 3 is sandwiched between the third sealing member 21 and the fourth sealing member 22. The third sealing member 21 is connected to the exterior part 5. The fourth sealing member 22 is connected to the connector 4. The middle member 3 is sandwiched through the third sealing member 21 and the fourth sealing member 22. The third sealing member 21, the fourth sealing member 22, the middle member 3 and the framework 1 may achieve an effect of mutually squeezing, so as to constitute a multi-layer mutually attached structure. Thus, sealing of two sides of the middle member 3 is realized, the sealing performance can be greatly improved, gaps between the middle member 3 and the framework 1 and between other adjacent connection structures are avoided, the problem of water leakage or air leakage is avoided, and thus the sealing performance is ensured.

The connector 4 is connected to one surface of the fourth sealing member 22 facing away from the middle member 3, so that the fourth sealing member 22 is sandwiched between the middle member 3 and the connector 4. Compacting for the fourth sealing member 22 can be realized through the arranged connector 4, so that the fourth sealing member 22 is tightly attached to the middle member 3. The mutual compacting effect of the connector 4, the third sealing member 21, the fourth sealing member 22, the middle member 3 and the framework 1 can be better realized, and thus the sealing effect is improved. In some examples, the connector 4, the fourth sealing member 22, the middle member 3, the third sealing member 21 and the framework 1 are in surface-to-surface connection, so as to constitute a multi-layer compacting sealing structure and improve the sealing performance.

Optionally, in an implementation of the invention, both the third sealing member 21 and the fourth sealing member 22 are of an annular structure. The third sealing member 21 and the fourth sealing member 22 are close to a circumferential edge of the middle member 3. In this way, air guiding is not affected while the sealing performance is ensured, so an effect of air guiding is achieved.

It may be understood that the third sealing member 21 and the fourth sealing member 22 extend in the circumferential edge of the middle member 3. The third sealing member 21 and the fourth sealing member 22 do not block a middle position of the middle member 3. The middle position of the middle member 3 may be used for making air and water pass. A position of the circumferential edge of the middle member 3 is sealed through the third sealing member 21 and the fourth sealing member 22.

In some examples, the third sealing member 21 and the fourth sealing member 22 may be made of foam. In some other examples, the third sealing member 21 and the fourth sealing member 22 may also be made of materials such as rubber.

Optionally, in another implementation of the invention, both the third sealing member 21 and the fourth sealing member 22 are of a sheet structure. A plurality of through holes are formed in middles of the third sealing member 21 and the fourth sealing member 22 and may be used for making air and water pass. Edges of the third sealing member 21 and the fourth sealing member 22 may be close to the circumferential edge of the middle member 3, so that the middles of the third sealing member 21 and the fourth sealing member 22 are opposite to the middle of the middle member 3. In some examples, the third sealing member 21 and the fourth sealing member 22 may be made of foam. In some other examples, the third sealing member 21 and the fourth sealing member 22 may also be made of materials such as rubber.

Optionally, in an implementation of the invention, the connector 4 has a first end and a second end. The first end of the connector 4 communicates with the air guide member 300. A first flange 41 is formed at the second end of the connector 4. The fourth sealing member 22 is in surface-to-surface contact with the first flange 41. In this way, a contact area of the connector 4 and the fourth sealing member 22 may be better improved, so a compacting effect is improved, and the sealing performance is improved.

The first end and the second end of the connector 4 may be two ends of the connector 4 in a length direction. The second end of the connector 4 is connected to the fourth sealing member 22, and compacting and sealing are realized. The second end of the connector 4 may realize communication and guiding of air with the middle member 3 and the framework 1. In some examples, the first flange 41 of the second end of the connector 4 may be of an annular structure formed by making the circumferential edge of the second end of the connector 4 extend outwards in a radial direction of the connector 4.

Optionally, a flow channel is arranged in the connector 4. The flow channel extends in a length direction of the connector 4 and is used for air flowing so as to implement air guiding. The first end and the second end of the connector 4 are provided with openings communicating with the flow channel. Air flowing into or out of the flow channel may be realized through the arranged openings, so air guiding is achieved.

Optionally, in an implementation of the invention, an assembling portion 51 is formed on one surface of the exterior part 5 facing the framework 1. Connection holes 6 are formed in the connector 4, the framework 1, the sealing mechanism 2 and the middle member 3. The assembling portion 51 penetrates through the connection holes 6. The connector 4, the framework1, the sealing mechanism 2 and the middle member 3 are connected to the assembling portion 51.

The assembling portion 51 extends towards the connector 4, the framework 1, the sealing mechanism 2 and the middle member 3. The connection holes 6 match the assembling portion 51. By making the assembling portion 51 penetrate through the connection holes 6, mutual limiting of the connector 4, the framework 1, the sealing mechanism 2 and the middle member 3 can be realized, and limiting and connection with the exterior part 5 are realized, so the framework 1, the sealing mechanism 2 and the middle member 3 are connected to the exterior part 5, the same connection securing effect is maintained, and compacting and sealing are achieved.

It may be understood that the connection holes 6 in the connector 4, the framework 1, the sealing mechanism 2 and the middle member 3 communicate with one another, so the assembling portion 51 may smoothly penetrate through the connection holes 6. In some examples, after the assembling portion 51 penetrates through the connection holes 6, the connector 4, the framework 1, the sealing mechanism 2 and the middle member 3 may be securely welded to the assembling portion 51. In some other examples, after the assembling portion 51 penetrates through the connection holes 6, a latch may be arranged for being connected to the assembling portion 51, and the connector 4, the framework 1, the sealing mechanism 2 and the middle member 3 are secured to the assembling portion 51, so the connection is implemented.

Optionally, there may be a plurality of assembling portions 51, the plurality of assembling portions 51 are arranged at intervals and may be distributed around an axis of the exterior part 5 at intervals in a surrounding mode, correspondingly, there are a plurality of connection holes 6, and the connection holes 6 are in one-to-one correspondence with the assembling portions 51.

Optionally, in an implementation of the invention, the air exit assembly 700 further includes a second sealing washer 53. The second sealing washer 53 is sandwiched between the exterior part 5 and the front hatch cover 100.

A connection gap between the exterior part 5 and the front hatch cover 100 may be sealed through the second sealing washer 53, so that the sealing performance between the exterior part 5 and the front hatch cover 100 is improved. In some examples, the second sealing washer 53 may be made of foam or rubber.

Optionally, in an implementation of the invention, one end of the exterior part 5 away from the framework 1 is provided with a second flange 54. The second flange 54 is used for being connected to the front hatch cover 100. The second sealing washer 53 is sandwiched between the second flange 54 and the front hatch cover 100.

The second flange 54 may be lapped over the front hatch cover 100. A lap joint edge may be arranged at the air outlet 101 of the front hatch cover 100. The second flange 54 may be in surface-to-surface connection with the lap joint edge. The second sealing washer 53 is arranged between the second flange 54 and the lap joint edge. In some examples, the second flange 54 may be of an annular structure formed by making a circumferential edge of one end of the exterior part 5 away from the framework 1 extend outwards in a radial direction of the exterior part 5.

Optionally, the air outlet 101 is arranged as being capable of moving relative to the air guide member 300.

The air guide structure of the vehicle front has a first state and a second state. In the first state, the front hatch cover 100 is opened, and the air outlet 101 does not communicate with the air guide member 300. In the second state, the front hatch cover 100 is closed, and the air outlet 101 communicates with the air guide member 300.

The front hatch cover 100 being opened means that the front hatch cover 100 of the vehicle is opened upwards, and a front cabin is exposed. The front hatch cover 100 being closed means that the front hatch cover 100 of the vehicle is closed downwards, and the front cabin is covered.

Optionally, in an implementation of the invention, the air guide structure of the vehicle front further includes a sealing rubber sleeve 400. A first end of the sealing rubber sleeve 400 is separably connected to the air guide member 300. A second end of the sealing rubber sleeve 400 is connected to one end of the connector 4 away from the exterior part 5. A soft connection of the connector 4 and the air guide member 300 can be realized through the arranged sealing rubber sleeve 400, so a certain degree of relative displacement may exist between the connector 4 and the air guide member 300, and assembling of the front hatch cover 100 and the opening and closing of the front hatch cover 100 may be facilitated. In addition, the sealing effect may be achieved through the sealing rubber sleeve 400, and a connection position between the air guide member 300 and the connector 4 can be sealed. It may be understood that in the first state, the front hatch cover 100 is opened and the first end of the sealing rubber sleeve 400 is separated from the air guide member 300. In this case, the air exit assembly 700 of the air outlet 101 does not communicate with the air guide member 300. In the second state, the front hatch cover 100 is closed and the first end of the sealing rubber sleeve 400 is connected to the air guide member 300. In this case, the air exit assembly 700 at the air outlet 101 communicates with the air guide member 300, so that air flowing can be implemented.

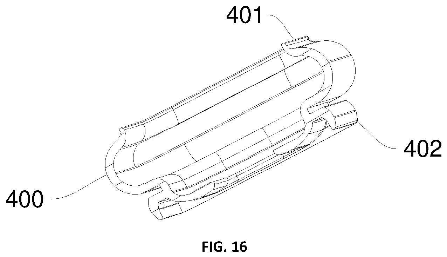

As shown in Fig.15 and Fig.16, in some examples, the first end of the sealing rubber sleeve 400 is separably connected to the first cover plate 301. The first cover plate 301 is provided with a connection port. The connection port is arranged as the second open end 3032 of the cavity 303. The sealing rubber sleeve 400 may be clamped into the connection port in part. It may be understood that the sealing rubber sleeve 400 is of a barrel-shaped structure, air may flow in the sealing rubber sleeve 400, and thus the air guide member 300 is made to communicate with the connector 4.

Optionally, in an implementation of the invention, the front hatch cover 100 includes a front hatch upper cover 102 and a front hatch lower cover 103. The front hatch upper cover 102 is connected to the front hatch lower cover 103. The sealing rubber sleeve 400 is connected to the front hatch lower cover 103. The air outlet 101 is arranged in the front hatch upper cover 102. The exterior part 5 is connected to the front hatch upper cover 102.

The front hatch upper cover 102 is an outer cover. The front hatch lower cover 103 is an inner cover. The front hatch upper cover 102 is exposed. The front hatch lower cover 103 faces to an interior of the front cabin. The sealing rubber sleeve 400 is connected to the front hatch lower cover 103, so the sealing rubber sleeve 400 is better separably connected to the air guide member 300. The air outlet 101 is located in the front hatch upper cover 102, so air flowing out may flow to an upper portion of the front hatch upper cover 102, an effect of spoiling is formed, and the wind drag is reduced. It needs to be noted that during a process of opening or closing the front hatch cover 100, the front hatch upper cover 102 moves together with the front hatch lower cover 103. When the front hatch cover 100 is opened, in this case, the sealing rubber sleeve 400 may be separated from the air guide member 300. When the front hatch cover 100 is closed, the sealing rubber sleeve 400 may be connected to the air guide member 300.

In some examples, an outer side wall of the sealing rubber sleeve 400 is provided with a clamping slot. The front hatch lower cover 103 is provided with a mounting hole, and the sealing rubber sleeve 400 is connected to the mounting hole. A position of the front hatch lower cover 103 close to the mounting hole is clamped into the clamping slot, and thus securing of the sealing rubber sleeve 400 is implemented.

Optionally, in an implementation of the invention, the first end of the sealing rubber sleeve 400 is provided with a first bending portion 401. The first bending portion 401 is separably connected to the air guide member 300. The second end of the sealing rubber sleeve 400 is provided with the second bending portion 402. The second bending portion 402 is connected to one end of the connector 4 away from the exterior part 5. Connection with the air guide member 300 is facilitated through the arranged first bending portion 401, the sealing effect of the sealing rubber sleeve 400 and the air guide member 300 is improved, and air leakage or water leakage is avoided. Connection with the connector 4 is facilitated through the second bending portion 402, the sealing effect of the sealing rubber sleeve 400 and the connector 4 is improved, and air leakage or water leakage is avoided. Both the first bending portion 401 and the second bending portion 402 are of an annular structure, the sealing effect is ensured, and both the first bending portion 401 and the second bending portion 402 are integrated with the sealing rubber sleeve 400.

Optionally, in an implementation of the invention, the second end of the sealing rubber sleeve 400 is provided with a third guide grating 500. Water flowing to the cavity 303 from the air outlet 101 can be blocked through the arranged third guide grating 500. The third guide grating 500 blocks the water blowing to the cavity 303 from the air outlet 101, so the water flow speed may be reduced and the water pressure may be reduced. It may be suitable for the scene of washing the vehicle with high pressure water, and overflowing of water from a gap between the sealing rubber sleeve 400 and the connector 4 due to the water pressure can be avoided. Meanwhile, the third guide grating 500 can guide air in the cavity 303 to the air outlet 101 without affecting air flowing.

Optionally, in an implementation of the invention, a flow area of the air exit assembly 700 gradually increases from an end close to the air guide member 300 to an end close to the front hatch cover 100. In other words, a flow area of a flow channel for air flowing in the air exit assembly 700 gradually increases from an end close to the air guide member 300 to an end close to the front hatch cover 100, so a volume of air guiding may be improved.

Optionally, in some examples, a flow area of the end of the air exit assembly 700 close to the front hatch cover 100 is set to be one time to two times a flow area of the end of the air exit assembly 700 close to the air guide member 300.

Optionally, in an implementation of the invention, in an air flowing direction, a length of a flow channel for air flowing in the air guide member 300 is greater than a length of a flow channel for air flowing in the air exit assembly 700. The air outlet 101 can be better arranged in a position of the front hatch cover 100 close to a front windshield, so the effect of spoiling is improved.

Optionally, in some examples, in the air flowing direction, the length of the flow channel for air flowing in the air guide member 300 is set to be one time to 1.5 times the length of the flow channel for air flowing in the air exit assembly 700.

Optionally, in an implementation of the invention, the air guide member 300 extends in the front-rear direction of the vehicle, and an axis of the air outlet 101 extends in the front-rear direction of the vehicle and tilts upwards. Both the air guide member 300 and the air outlet 101 are close to vehicle sides in the left-right direction of the vehicle.

Optionally, in some examples, an included angle between the axis of the air outlet 101 and a horizontal plane is less than or equal to 30°.

A second aspect of the invention further provides a vehicle, including the above air guide structure of the vehicle front.

## Claims

1. An air guide structure of a vehicle front, comprising:
a front hatch cover (100) with an air outlet (101);
a vehicle lamp assembly (200) with an air inlet (201); and
an air guide member (300), wherein one end of the air guide member (300) communicates with the air inlet (201), and the other end of the air guide member (300) is capable of communicating with the air outlet (101).

2. The air guide structure of the vehicle front according to claim 1, wherein the vehicle lamp assembly (200) comprises a lamp body (202) and an air-entering guide member (203) with the air inlet (201), the air-entering guide member (203) is connected to an outer wall of the lamp body (202), and the air inlet (201) penetrates through the air-entering guide member (203) in a front-rear direction of a vehicle;
optionally, wherein the air-entering guide member (203) is detachably connected to the lamp body (202);
optionally, wherein the outer wall of the lamp body (202) has a first connection portion (206), a second connection portion (207) is on one surface of the air-entering guide member (203) facing the lamp body (202), and the first connection portion (206) is clamped with the second connection portion (207).

3. The air guide structure of the vehicle front according to claim 2, wherein the air-entering guide member (203) is connected to a top or bottom of the lamp body (202) in a height direction of the vehicle; and
the air-entering guide member (203) has a guide groove (204), a part of the air guide member (300) extends to the air-entering guide member (203) and is connected to a groove opening of the guide groove (204), two ends of the guide groove (204) in the front-rear direction of the vehicle are open ends, and the air guide member (300) extending to the air-entering guide member (203) and the guide groove (204) jointly form the air inlet (201);
optionally, wherein a first sealing member (205) is at the groove opening of the guide groove (204), and the first sealing member (205) is sandwiched between the groove opening of the guide groove (204) and the air guide member (300) extending to the guide groove (204).

4. The air guide structure of the vehicle front according to any one of claims 1 to 3, wherein the air guide member (300) comprises a first cover plate (301) and a second cover plate (302), the first cover plate (301) covers the second cover plate (302) in a height direction of a vehicle, the first cover plate (301) and the second cover plate (302) define a cavity (303), and two ends of the cavity (303) in a front-rear direction of the vehicle are respectively a first open end (3031) and a second open end (3032); and
the first open end (3031) of the cavity (303) communicates with the air inlet (201), the second open end (3032) of the cavity (303) communicates with the air outlet (101), and the air inlet (201), the cavity (303) and the air outlet (101) constitute an air guiding channel (600);
optionally, wherein in the front-rear direction of the vehicle, a front end of the first cover plate (301) or the second cover plate (302) extends to the vehicle lamp assembly (200) and is connected to the vehicle lamp assembly (200);
optionally, wherein the air guide member (300) further comprises a second sealing member (307), and the second sealing member (307) is sandwiched between the first cover plate (301) and the second cover plate (302).

5. The air guide structure of the vehicle front according to claim 4, wherein the second cover plate (302) has a water discharging port (304), and the water discharging port (304) is configured to discharge water in the cavity (303);
optionally, wherein the water discharging port (304) has a first guide grating (305), and the first guide grating (305) is configured to at least guide water entering the cavity (303) to the water discharging port (304).

6. The air guide structure of the vehicle front according to claim 4 or claim 5, wherein a second guide grating (306) is at the second open end (3032) of the cavity (303), and the second guide grating (306) is configured to at least guide air in the cavity (303) to the air outlet (101).

7. The air guide structure of the vehicle front according to any one of claims 1 to 6, wherein the air guide structure of the vehicle front further comprises an air exit assembly (700); and
the air exit assembly (700) comprises an exterior part (5), a sealing mechanism (2) and a connector (4), the exterior part (5) is connected to the front hatch cover (100) and is at the air outlet (101), one end of the connector (4) communicates with the exterior part (5), the other end of the connector (4) communicates with the air guide member (300), and the sealing mechanism (2) is sandwiched between the connector (4) and the exterior part (5);
optionally, wherein the air exit assembly (700) further comprises a second sealing washer (53), and the second sealing washer (53) is sandwiched between the exterior part (5) and the front hatch cover (100).

8. The air guide structure of the vehicle front according to claim 7, wherein the air exit assembly (700) further comprises a middle member (3), and the middle member (3) is connected to the sealing mechanism (2) and between the connector (4) and the exterior part (5);
optionally, wherein the sealing mechanism (2) comprises a third sealing member (21) and a fourth sealing member (22), the third sealing member (21) and the fourth sealing member (22) are opposite to each other, the middle member (3) is sandwiched between the third sealing member (21) and the fourth sealing member (22), the third sealing member (21) is connected to the exterior part (5), and the fourth sealing member (22) is connected to the connector (4).

9. The air guide structure of the vehicle front according to claim 7 or claim 8, wherein the air exit assembly (700) further comprises a framework (1), and the framework (1) is between the exterior part (5) and the sealing mechanism (2) and connected to the exterior part (5); and
a first sealing washer (52) is between the framework (1) and the exterior part (5).

10. The air guide structure of the vehicle front according to any one of claims 7 to 9, wherein the air guide structure of the vehicle front further comprises a sealing rubber sleeve (400), a first end of the sealing rubber sleeve (400) is separably connected to the air guide member (300), and a second end of the sealing rubber sleeve (400) is connected to an end of the connector (4) away from the exterior part (5);
optionally, wherein the front hatch cover (100) comprises a front hatch upper cover (102) and a front hatch lower cover (103), the front hatch upper cover (102) is mutually connected to the front hatch lower cover (103), the sealing rubber sleeve (400) is connected to the front hatch lower cover (103), the air outlet (101) is in the front hatch upper cover (102), and the exterior part (5) is connected to the front hatch upper cover (102);
optionally, wherein the first end of the sealing rubber sleeve (400) has a first bending portion (401), the first bending portion (401) is separably connected to the air guide member (300), the second end of the sealing rubber sleeve (400) has a second bending portion (402), and the second bending portion (402) is connected to the end of the connector (4) away from the exterior part (5);
optionally, wherein the second end of the sealing rubber sleeve (400) is provided with a third guide grating (500).

11. The air guide structure of the vehicle front according to any one of claims 7 to 10, wherein a flow area of the air exit assembly (700) gradually increases from an end of the air exit assembly (700) close to the air guide member (300) to an end of the air exit assembly (700) close to the front hatch cover (100);
optionally, wherein a flow area of the end of the air exit assembly (700) close to the front hatch cover (100) is one time to two times a flow area of the end of the air exit assembly (700) close to the air guide member (300).

12. The air guide structure of the vehicle front according to any one of claims 7 to 11, wherein in an air flowing direction, a length of a flow channel for air flowing in the air guide member (300) is greater than a length of a flow channel for air flowing in the air exit assembly (700);
optionally, wherein in the air flowing direction, the length of the flow channel for air flowing in the air guide member (300) is one time to 1.5 times the length of the flow channel for air flowing in the air exit assembly (700).

13. The air guide structure of the vehicle front according to any one of claims 1 to 12, wherein the air guide member (300) extends in the front-rear direction of a vehicle, and an axis of the air outlet (101) extends in the front-rear direction of the vehicle and tilts upwards; and
both the air guide member (300) and the air outlet (101) are close to vehicle sides in a left-right direction of the vehicle;
optionally, wherein an included angle between the axis of the air outlet (101) and a horizontal plane is less than or equal to 30°.

14. The air guide structure of the vehicle front according to any one of claim 1 to 13, wherein the air outlet (101) is movable relative to the air guide member (300);
wherein the air guide structure of the vehicle front has a first state and a second state; in the first state, the front hatch cover (100) is opened, and the air outlet (101) does not communicate with the air guide member (300); and in the second state, the front hatch cover (100) is closed, and the air outlet (101) communicates with the air guide member (300).

15. A vehicle, comprising the air guide structure of the vehicle front according to any one of claims 1 to 14.
